(19) **Europäisches Patentamt**
**European Patent Office**
**Office européen des brevets**

(11) **EP 2 695 108 B1**

(12) **FASCICULE DE BREVET EUROPEEN**

(45) Date de publication et mention
de la délivrance du brevet:
**29.04.2015 Bulletin 2015/18**

(51) Int Cl.:
**G06K 9/62** *(2006.01)*　　**G06Q 10/00** *(2012.01)*
**G06Q 10/08** *(2012.01)*

(21) Numéro de dépôt: **12712135.8**

(22) Date de dépôt: **05.03.2012**

(86) Numéro de dépôt international:
**PCT/FR2012/000076**

(87) Numéro de publication internationale:
**WO 2012/131181 (04.10.2012 Gazette 2012/40)**

(54) **PROCÉDÉ D'EXTRACTION AUTOMATISÉE D'UN PLANOGRAMME À PARTIR D'IMAGES DE LINÉAIRE**

VERFAHREN ZUR AUTOMATISIERTEN EXTRAKTION EINES PLANOGRAMMS AUS BILDERN VON REGALEN

METHOD FOR THE AUTOMATED EXTRACTION OF A PLANOGRAM FROM IMAGES OF SHELVING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2011 FR 1100980**

(43) Date de publication de la demande:
**12.02.2014 Bulletin 2014/07**

(73) Titulaire: **CVDM Solutions**
**75020 Paris (FR)**

(72) Inventeurs:
• **AUCLAIR, Adrien**
**F-75010 Paris (FR)**
• **TOUSCH, Anne-Marie**
**F-92700 Colombes (FR)**

(74) Mandataire: **Bonnet, Michel**
**Cabinet Bonnet**
**93, rue Réaumur - Boîte 10**
**75002 Paris (FR)**

(56) Documents cités:
**US-A1- 2009 059 270　　US-A1- 2009 192 921**
**US-A1- 2011 011 936**

**Description**

Actuellement le merchandising, c'est-à-dire « l'ensemble d'études et de techniques d'application, mises en oeuvre séparément ou conjointement par les distributeurs et les producteurs, en vue d'accroître la rentabilité du point de vente et l'écoulement des produits, par l'adaptation permanente de l'assortiment aux besoins du marché et par la présentation appropriées des marchandises » (Institut Français du Merchandising, voir le document "A. Wellhoff et J.E. Masson. Le merchandising : bases, nouvelles techniques, category management. Dunod, 2005.") nécessite un suivi quotidien et beaucoup d'efforts. La présentation et la mise en valeur du produit sur le point de vente est un élément important qui permet de déclencher l'acte d'achat. Ainsi les marques de grandes consommations signent des conventions avec les distributeurs pour s'assurer de la disponibilité du bon produit, à la bonne place, en bonne quantité, au bon prix et au bon moment (5R de Keppner). Cela oblige les fabricants à contrôler régulièrement le bon positionnement de leurs produits dans les linéaires des magasins.

Le contrôle du placement de chaque produit est aujourd'hui réalisé de manière manuelle. Des agents sont envoyés sur le terrain pour inspecter chaque magasin et vérifier la concordance entre le planogramme et le placement effectif des produits en magasin. Etant donné le grand nombre de magasins et le nombre de produits par magasin, la vérification manuelle coûte extrêmement chère et ne représente pas une solution optimale.

Pour cela il est opportun de proposer un procédé de construction automatique d'un planogramme à partir d'une ou plusieurs photos de linéaires.

Si l'état de l'art est riche en ce qui concerne la reconnaissance d'image, la façon dont nous exploitons ces techniques pour la construction automatique de planogrammes est nouvelle. La description générale d'une technique d'extraction automatique de planogramme a déjà été effectuée dans le document "Agata Opalach, Andrew Fano, Fredrik Linaker, et Robert Groenevelt. Planogram Extraction Based on Image Processing, WO2009/027839.A2, 2009", montrant combien ce type d'invention peut susciter de l'intérêt. Cependant notre invention innove en adaptant spécifiquement les méthodes de reconnaissance d'image à l'extraction de planogrammes.

La partie reconnaissance d'image en elle-même construit sur la base de divers travaux de l'état de l'art, dont en particulier le document "David G. Lowe. Method and Apparatus for Identifying Scale Invariant Features and Use of Same for Locating an Object in an Image, 2004". La détection des produits pourrait utiliser directement de tels algorithmes. Cependant, en pratique, leur application pour la détection de produits dans les images de linéaires se révèle insuffisante, en particulier lorsque les produits présentent des variations de texture, ou lorsque des produits différents ont des visuels très similaires, et ces algorithmes renvoient des résultats incomplets, et partiellement erronés.

Plusieurs nouveautés sont introduites pour améliorer les résultats :

- l'exploitation des spécificités liées au contexte d'utilisation. L'idée d'utiliser le contexte pour la détection d'objet dans l'état de l'art reste relativement récente (voir le document "Carolina Galle-guillos et Serge Belongie. Context based object categorization : A critical survey. Computer Vision and Image Understanding, 114(6) :712-722, Juin 2010."). Dans notre invention, cette notion est spécialisée pour améliorer l'extraction des produits des images de linéaires et introduite de manière originale.
- les algorithmes de reconnaissance d'objet sont souvent spécialisés pour l'une des tâches suivantes : détection d'une catégorie d'objet bien définie, détection d'objets similaires, identification d'instances d'une catégorie d'objet définie. Notre procédé est innovant en ce qu'il exploite ces trois types de reconnaissance dans une même chaîne de traitement.

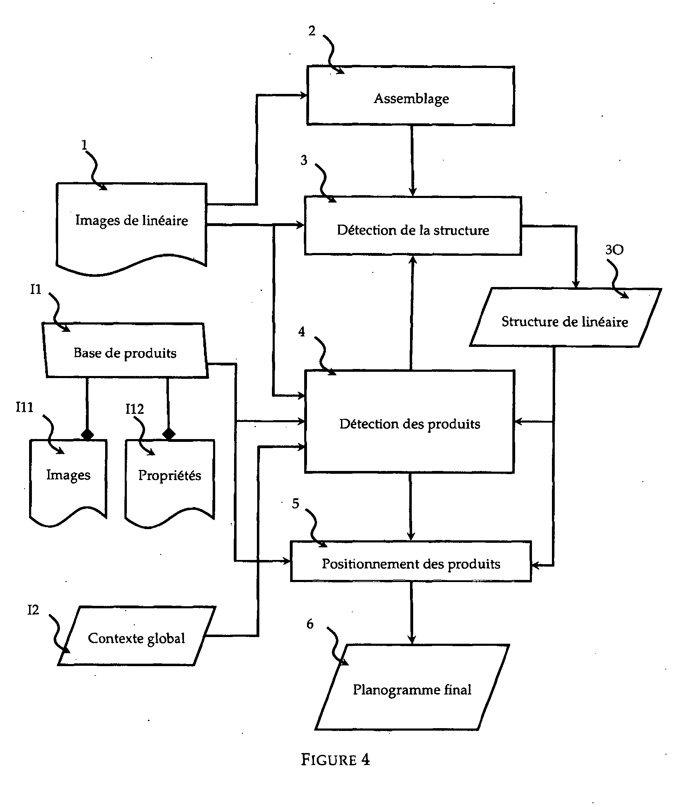

Nous proposons dans ce qui suit un tel procédé, représenté par le schéma de la figure 4. Le procédé comporte les étapes suivantes :

- Une étape de réception de l'ensemble des images (1) composant le linéaire. Ces images peuvent être acquises par différents dispositifs, incluant appareils photos numériques et téléphones mobiles.
- Une étape d'assemblage (2) des images, pour composer une image de linéaire unique, dans le cas où il y a plusieurs images d'entrées (1) pour représenter le linéaire.
- Une étape de détection automatique des produits (4) représentés dans la ou les images de linéaire.
- Une étape de construction automatique de la structure du planogramme (3), reprenant les résultats de l'étape précédente (4) et/ou utilisant des méthodes de reconnaissance d'image spécifiques.
- Une étape de positionnement automatique des produits sur le planogramme (5), reprenant les résultats de l'étape de détection automatique des produits (4) et les résultats de l'étape de construction automatique de la structure (3).

La caractérisation principale de ce procédé est qu'il comporte une étape de détection de produits (4) spécifiquement orientée pour les applications merchandising en ce qu'elle est construite à partir des techniques de reconnaissance d'image et des techniques d'apprentissage artificiel pour intégrer des caractéristiques spécifiques aux planogrammes. Cette étape de détection de produits est caractérisée en ce qu'elle comporte au minimum deux étapes de classification :

1. une étape d'initialisation (41), effectuant une détection au niveau des catégories de produits,
2. une étape de classification (42), effectuant une classification au niveau des produits eux-mêmes, chacune de ces étapes intégrant une première étape de détection/classification (71), suivie d'une étape de filtrage (73), basé sur les caractéristiques spécifiques aux planogrammes et/ou aux produits.

Plus précisément, la première étape (41) permet d'estimer un premier ensemble de candidats sous la forme de couples (hypothèse, probabilité de détection), dans lequel une hypothèse est elle-même un couple (position dans l'image, produit identifié). Cette étape (41) est constituée d'une étape de classification de catégories (4171) et d'une étape de filtrage global de ces résultats (4173) utilisant des méthodes probabilistes pour intégrer des informations spécifiques aux produits (I12), par exemple des informations de type échelle.

La deuxième étape (42) estime un nouvel ensemble de candidats à partir du premier, conservant la même forme. Elle est constituée d'une étape de classification (4271) basée sur des appariements de points d'intérêts, et d'une seconde étape de filtrage (4273) au niveau du planogramme, intégrant des informations globales sur le contexte (I2) estimées au préalable sur une base de planogrammes (I3).

Avantageusement, le procédé pourra comporter à la suite de l'étape de classification (42), une ou plusieurs étapes de classification (43) plus spécialisées :

- une étape de classification exploitant spécifiquement les information de couleur des images,
- une étape de classification permettant plus spécifiquement de discriminer entre des produits à partir de quelques détails seulement.

Avantageusement, les informations globales de contexte (I2) pourront comporter les mesures suivantes, calculées sur une base de planogrammes (I3) :

- mesures de probabilités de cooccurrences entre produits,
- mesures de probabilités de positionnement vertical des produits,
- mesures de fréquence des produits.

Ces mesures pourront être intégrées après une étape d'estimation des probabilités indépendante pour chacune des mesures de probabilités définies dans les informations globales (I2), en utilisant une combinaison probabiliste paramétrée de type (B), où les paramètres sont déterminés au préalable par optimisation d'un taux de reconnaissance global.

Avantageusement, la détection de la structure (3) est par exemple effectuée selon l'une des deux méthodes suivantes :

- par traitement d'image avant l'étape de (4), et en utilisant les résultats de l'étape d'assemblage (2), permettant en particulier son utilisation dans le calcul des informations globales (I2),
- ou à partir des résultats de la détection (4), dans un cas où les informations globales (I2) sont calculées de manière indépendante de la structure extraite (30).

Avantageusement, l'étape d'initialisation (41) au début de l'étape de détection des produits (4) effectuera une classification des fenêtres en utilisant des catégories définies par exemple de l'une des manières suivantes :

- par une classification semi-supervisée des produits, une catégorie regroupant des produits partageant les mêmes caractéristiques géométriques, et la supervision servant uniquement à conserver les différentes images d'un même produit dans la même catégorie,
- par les catégories sémantiques de produits définies dans les propriétés des produits (I12), c'est-à-dire de manière totalement supervisée.

D'autres avantages et caractéristiques de l'invention seront mieux compris à l'aide de la description des dessins annexés, qui représentent :

- la figure 1, un schéma représentant un dispositif minimal pour mettre en oeuvre notre procédé de construction automatique d'un planogramme,
- la figure 2, un schéma représentant la structure d'un planogramme (30), tel qu'elle est construite par notre procédé,

- la figure 3, un schéma représentant un planogramme (6) tel qu'il est construit par notre procédé,
- la figure 4, un diagramme de flux montrant les différentes étapes constituant le procédé de construction automatique d'un planogramme,
- la figure 5, un diagramme de flux représentant globalement les différentes étapes constituant l'étape de détection automatique des produits (4) avec intégration des caractéristiques spécifiques (I12) et (12),
- la figure 6, un diagramme de flux détaillant les étapes à l'intérieur d'un bloc de classification (7) de la figure 5,
- la figure 7, un exemple de carte de cooccurrences, décrivant la probabilité que deux produits apparaissent selon certaines configurations spatiales,
- la figure 8, un schéma représentant un exemple d'images de deux produits justifiant l'application d'une étape supplémentaire (43) de classification couleur,
- la figure 9, un schéma représentant un exemple d'images de trois produits justifiant l'application d'une étape supplémentaire (43) d'identification visuelle.

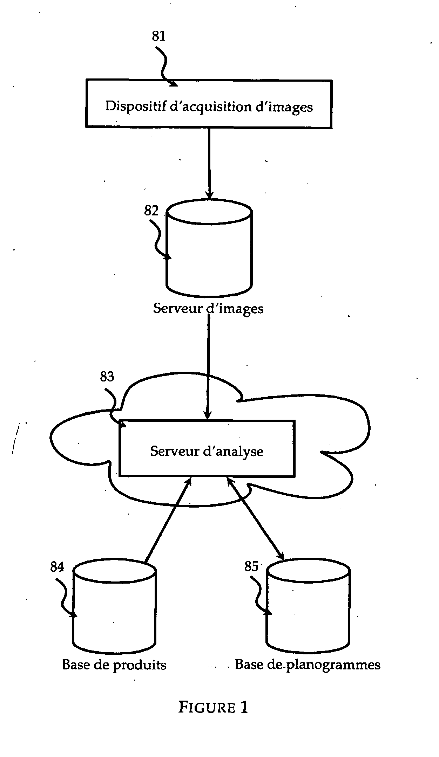

La figure 1 est un schéma représentant un dispositif minimal pour mettre en oeuvre notre procédé de construction automatique d'un planogramme. Un dispositif d'acquisition d'images (81) permet de créer des images de linéaires (1), stockée sur un serveur d'images (82). Le serveur d'analyse (83) récupère les images (1) sur le serveur d'images (82) pour construire un planogramme (6) en utilisant la base de produits stockées sur le serveur de données (84), ainsi que le contexte global (12) calculé à partir de planogrammes stockés dans la base de planogrammes (85). Le planogramme final (6) lui-même est stocké dans la base (85).

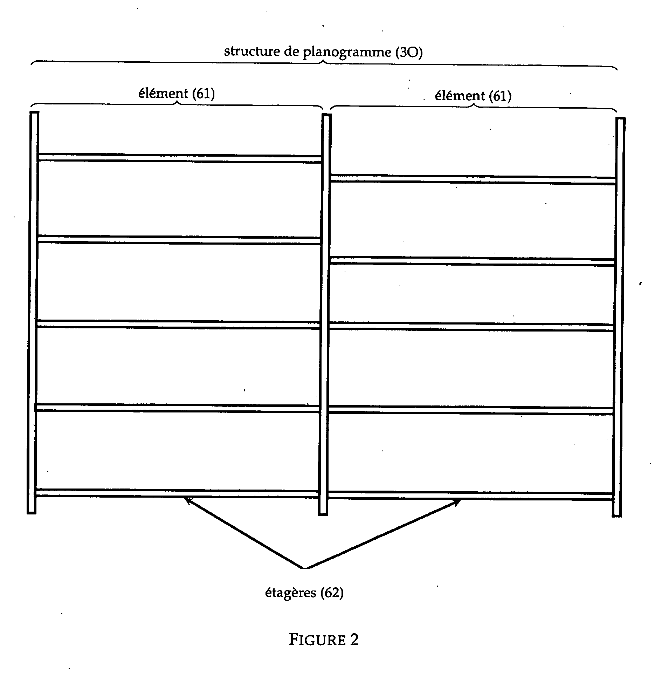

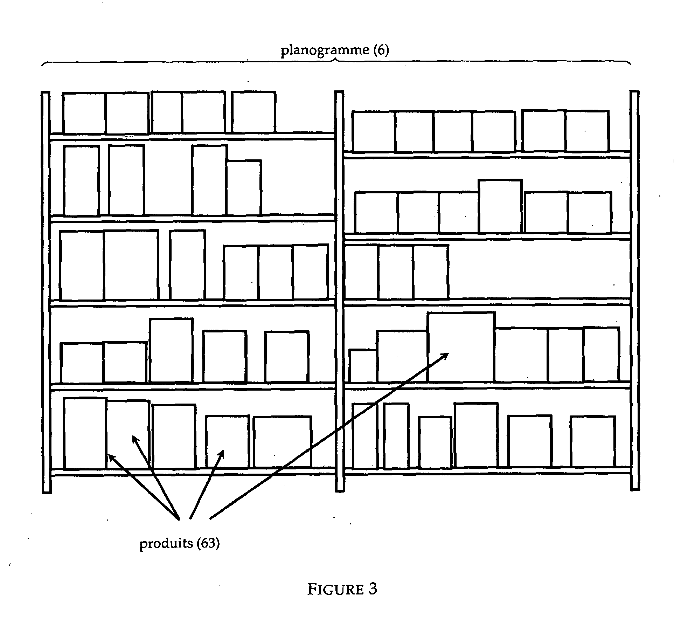

La figure 2 est un schéma représentant la structure d'un planogramme (30), tel qu'elle est construite par notre procédé. Une structure (30) est ainsi composée d'éléments (61) et d'étagères (62). La figure 3 est un schéma représentant un planogramme (6) tel qu'il est construit par notre procédé, c'est-à-dire une structure de planogramme (30) avec un ensemble de produits (63) positionnés en fonction des images d'entrée (1). Un planogramme (6) est donc constitué de produits et d'un ensemble d'éléments (61), servant de support aux produits. Un élément est constitué d'étagères (62). L'élément constitutif de base de la structure est donc l'étagère. Dans le planogramme final, un produit (63) est associé à une étagère.

La figure 4 est un diagramme de flux montrant les différentes étapes constituant le procédé de construction automatique d'un planogramme. En entrée du procédé, on trouve non seulement les images (1), mais aussi :

- la base de produits (I1), constituée des images (111), et des propriétés des produits (I12),
- des informations de contexte global (I2), correspondant à des connaissances métiers spécifiques, extraites d'une base de planogrammes.

La structure de linéaire ou structure du planogramme (30) est une sortie intermédiaire du procédé, nécessaire pour la construction du planogramme final (6).

Le procédé est constitué des quatre étapes suivantes :

- une étape d'assemblage (2) des différentes images (1),
- une étape de détection de la structure du linéaire (3),
- une étape de détection des produits (4), elle-même structurée en plusieurs étapes. Selon un mode de réalisation du procédé, cette étape exploite les résultats de la détection de structure (3), et peut permettre également de les réévaluer, créant un cycle (3)-(30)-(4)-(3),
- une étape de positionnement des produits (5) détectés en (4) sur la structure (30).

Si plusieurs images (1) sont fournies en entrée du procédé, la première étape consiste à les assembler. L'étape d'assemblage (2) effectue la fusion des images en une seule, pour avoir une image panoramique du linéaire. Elle utilise pour cela des algorithmes classiques (détection de points d'intérêt, appariement de ces points, estimation d'une matrice de passage d'une image à l'autre, projection dans un référentiel unique). Elle constitue une étape nécessaire du procédé dans le cas où le linéaire est représenté par plusieurs images, pour pouvoir calculer plus tard la position d'un produit dans le planogramme quelque soit l'image dans laquelle il est détecté.

La présente invention couvre tous les modes selon lequel la fusion des images peut être effectuée. La mise en oeuvre du procédé n'est pas limitée à l'un ou l'autre mode de fusion.

L'ensemble des éléments et des étagères constitue la structure du linéaire (30). Les étagères sont détectées de manière automatique (3). Selon deux modes de réalisation possibles, la détection des étagères se fait :

1. Indépendamment de la détection de produits, en détectant les principales lignes horizontales, c'est-à-dire en utilisant des techniques de traitement d'images sur (1), combinées avec les résultats de l'assemblage (2),

2. En utilisant la détection de produits (par exemple lorsque la première solution échoue). La hauteur des différentes étagères est estimée en fonction de la position des produits après une passe de détection de produits, en supposant que les produits sont posés sur les étagères (hypothèse toujours réalisée en pratique). En effet, dans ce cas, la base des produits définit clairement la ligne positionnant l'étagère.

S'il y a une seule image en entrée, on considère qu'il n'y a qu'un élément. Sinon, les séparations verticales entre éléments pourront être estimées en supposant que les images en entrée correspondent à une image par élément environ, et en tenant compte des recouvrements nécessaires à l'assemblage (2) et mis en évidence au cours de cette même étape (2).

Selon un mode de réalisation de la présente invention, la structure (30) est intégrée dans le procédé de détection à deux niveaux. En premier lieu, elle est utilisée pour localiser la recherche des produits (4) sur les zones correspondant à des étagères : les images sont découpées en plusieurs sous-images, en fonction de la position des étagères. En ce sens, intégrer la structure constitue une optimisation de la détection d'objets - le principe de détection de produits fonctionne avec ou sans.

Ensuite, la structure (30) peut être utilisée par exemple pour la définition de certains éléments du contexte (12), sur lequel nous reviendrons plus loin. Lorsqu'elle est intégrée à cet effet, elle fait partie des composantes essentielles de l'étape de détection d'objets selon un mode de mise en oeuvre du procédé selon l'invention.

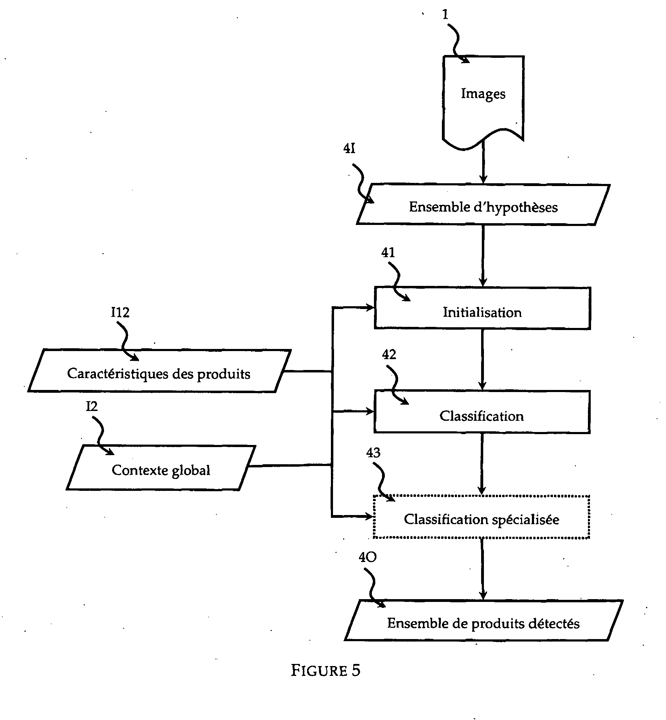

La figure 5 est un diagramme de flux représentant globalement les différentes étapes constituant l'étape de détection automatique des produits (4) avec intégration des caractéristiques spécifiques (I12) et (I2). L'étape de détection de produits (4) se situe au coeur du procédé de construction du plano-gramme. Les blocs (41), (42) et (43) décrivent des étapes du procédé suivant un schéma type appelé bloc de classification (7) pour intégrer les caractéristiques (I12) et (I2).

L'objectif est de découvrir les produits de la base contenus dans la ou les images d'entrée et leur position relativement à celles-ci.

On note $\mathcal{L} = \{l_1, \ldots, l_m\}$ l'ensemble des produits contenus dans la base, assimilé à un ensemble de labels. On appelle une fenêtre $f$ une sous-partie de l'image. Selon un mode de réalisation de la présente invention, on pourra avoir $f = \{x, y, w, h\}$ un rectangle extrait d'une image, où (x, y) dénote les coordonnées du pixel en haut à gauche du rectangle dans l'image, et (w, h) est la largeur et la hauteur en pixel du rectangle. En sortie de (4), l'objectif est d'avoir un "bon" ensemble de candidats (40), où un candidat est un couple (h, p(h)), où :

- $h$ est une *hypothèse,* associant un produit à une fenêtre et notée $h = (f,l)$,
- et p(h) est la probabilité que cette hypothèse soit vérifiée, c'est-à-dire la probabilité que la fenêtre $f$ contienne le produit 1.

Un "bon" candidat a une hypothèse $h = (f, l)$ "vraie", c'est-à-dire que la fenêtre $f$ contient vraiment une image du produit $l$, associée à une probabilité "suffisante", c'est-à-dire que toute autre hypothèse sur la même fenête a une probabilité inférieure. Un "bon" ensemble de candidats est un ensemble contenant autant que possible de "bons" candidats.

On notera $\mathcal{H}$ un ensemble d'hypothèses, $p(\mathcal{H})$ l'ensemble des probabilités associées à ces hypothèses, et ($\mathcal{H}$, $p(\mathcal{H})$) l'ensemble des candidats résultant.

Dans sa forme la plus simple, la détection se baserait sur une méthode de reconnaissance d'image de l'état de l'art classique pour déterminer une liste de produits candidats, par exemple la méthode décrite dans le document "David G. Lowe. Method and Apparatus for Identifying Scale Invariant Features and Use of Same for Locating an Object in an Image, 2004". Dans ce cas, outre l'image de linéaire (1), on n'utiliserait en entrée que les images de la base de produits (I1). En général, cette méthode donne une liste de candidats incomplète d'une part, et qui comporte des erreurs d'autre part.

Notre invention construit sur cette base, mais apporte plusieurs améliorations notamment en intégrant les connaissances spécifiques que l'on a :

1. sur l'image d'entrée (1) : la structure du linéaire (30),

2. sur la base de produits (I1) : leurs propriétés (112) géométriques (la taille, la forme) et sémantiques (segment, sous-segment..., marque),

3. sur le contexte global (I2) : des statistiques calculées sur un ensemble de planogrammes (I3).

Notre invention porte sur l'intégration conjointe de ces connaissances dans le procédé de détection de produits.

Nous commençons par décrire ces différentes données. Les caractéristiques des produits (I12) sont définies pour chaque produit dans la base de produits (I1). Dans un mode de réalisation, on peut utiliser en particulier :

- les catégories de produits, qui correspondent à différents champs renseignés en base : marque, hiérarchie de segments, type de packaging...
- la taille d'un produit : la largeur et la hauteur réelle du produit, en centimètres, sont renseignées.

Les caractéristiques des produits sont utilisées à plusieurs niveaux :

- Dès la première étape de la détection, pour apporter éventuellement une supervision à la définition des détecteurs de catégories de produits,
- Pour effectuer un filtrage, et par exemple assurer une cohérence de taille ou de marque.

Le contexte global (I2) fournit des informations importantes, qu'il est avantageux d'intégrer au procédé de reconnaissance d'objet. Le contexte est exprimé sous la forme de cartes de probabilités 1D ou 2D, intégrées en utilisant des méthodes probabilistes, pour filtrer un ensemble de candidats ( $\mathcal{H}$ , $p(\mathcal{H})$ ). Le procédé selon l'invention propose d'introduire les caractéristiques numériques suivantes :

- Cartes de cooccurrences 2D,
- Probabilité de positionnement vertical,
- Fréquence d'un produit.

Ces caractéristiques sont estimées sur une base d'apprentissage, contenant une vérité terrain : un ensemble de planogrammes (13), créés manuellement ou créés automatiquement et vérifiés manuellement.

Les caractéristiques de contexte (12) sont évaluées par rapport au référentiel d'un planogramme. S'il y a plusieurs images de linéaire (1) en entrée, les caractéristiques sont introduites en utilisant l'ensemble des détections sur les images. Nous reviendrons plus loin sur ce point. Nous allons maintenant détailler les différentes caractéristiques globales qui sont estimées selon un mode de mise en oeuvre du procédé selon l'invention.

La première caractéristique que nous introduisons se présente sous la forme de cartes de cooccurrences 2D. Ces cartes permettent par exemple de représenter conjointement la disposition relative des produits et la fréquence à laquelle deux produits apparaissent ensemble :

- Distances entre produits / positions relatives : par exemple, des produits d'une même marque et d'un même segment sont généralement regroupés dans une même zone. Par exemple, pour des jambons, on trouve généralement les paquets de 2 tranches au-dessus des paquets de 4, eux-mêmes au-dessus des paquets de 6.
- Fréquences de cooccurrences entre produits : certains produits n'apparaissent jamais ensemble (ex. des produits de deux enseignes différentes), d'autres sont rarement dans une même zone (une rillette et un jambon).

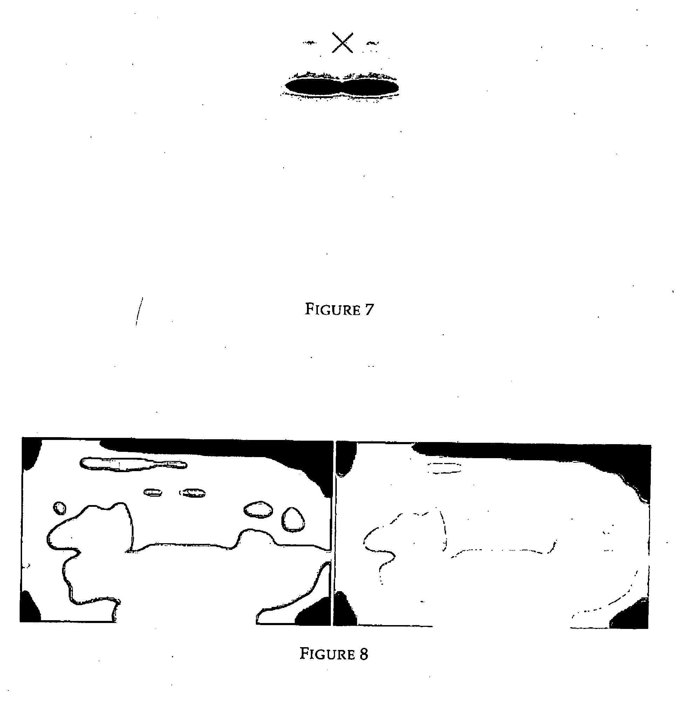

La figure 7 donne un exemple de carte de cooccurrences entre deux produits d'une même marque et d'un même segment. La carte représente la probabilité de trouver le produit test (produit 2) pour chaque position, lorsque le produit de référence (produit 1) est situé au milieu de la carte (représenté par une croix). Plus un pixel est proche du noir, plus il est probable de trouver le produit 2 à cette position. Dans cet exemple, on peut donc voir que le produit 2 est généralement situé en dessous du produit 1, souvent à côté, et rarement au-desssus.

Ces cartes sont estimées sur un ensemble d'apprentissage en utilisant un estimateur de densité, par exemple un estimateur de densité à noyau (ou estimateur de Parzen, selon la description du document Emanuel Parzen. On Estimation of a Probability Density Function and Mode. *Annals of Mathematical Statistics,* 33(3) :1065-1076,1962.").

Ainsi, pour un couple de produits donnés, on estime une fonction de densité de probabilité 2D. En notant $x \in \mathbb{R}^d$ la position relative du produit 1 par rapport au produit 2, $c_i$, $i$ = 1... n l'ensemble des positions relatives de ces produits dans la base d'apprentissage, la fonction de densité de probabilité estimée $\hat{f}$ peut s'écrire comme la combinaison de gaussiennes suivante :

$$\hat{f}(x) = \frac{1}{n} \sum_{i=1}^{n} K_\sigma(x - x_i), \qquad\qquad (A)$$

où $K_\sigma$ est un noyau gaussien, et où le paramètre des gaussiennes $\sigma \in \mathbb{R}^d$ est fixé de manière empirique et dépend des distances choisies.

Le vecteur $x \in \mathbb{R}^d$ décrivant la position relative des deux produits peut être défini de différentes manières. Dans sa forme la plus générique, $d = 2$ et $x$ correspond aux distances en millimètres horizontalement et verticalement. Dans une forme plus spécifique à notre application, la distance verticale intègre explicitement la structure du linéaire (30) : elle est calculée en nombre d'étagères.

Une deuxième caractéristique pouvant être utilisée selon un mode de réalisation de la présente invention représente la probabilité de positionnement vertical et exploite le fait que certains produits sont placés plutôt en hauteur, d'autres plutôt dans les bacs. Par exemple, on trouvera plus probablement une grande bouteille en bas qu'en haut d'un rayon. Il est avantageux d'intégrer ces particularités dans le procédé de reconnaissance.

Pour cela, on estime la probabilité 1D de trouver un produit à une certaine hauteur, de la même manière que précédemment, c'est-à-dire en utilisant un estimateur de densité sur la base d'apprentissage (I3).

Enfin, selon un mode de réalisation de la présente invention, la dernière caractéristique est basée sur la probabilité *a priori* de trouver un produit, c'est-à-dire sa fréquence. En effet, la distribution typique des produits n'est pas uniforme. Pour du jambon par exemple, les paquets de 4 sont bien plus courants que les paquets de 8. Les résultats de la détection peuvent être ajustés pour respecter ce motif.

La fréquence de chaque produit est estimée sur la base d'apprentissage, et peut être mise à jour régulièrement pour tenir compte de l'évolution d'un rayon au cours du temps.

selon un mode de réalisation de la présente invention, ces trois caractéristiques, cartes de cooccurrences, probabilités de positionnement vertical et fréquences, représentent le contexte (I2).

Ayant décrit le calcul des caractéristiques en entrée, nous allons maintenant décrire pas à pas le procédé de détection.

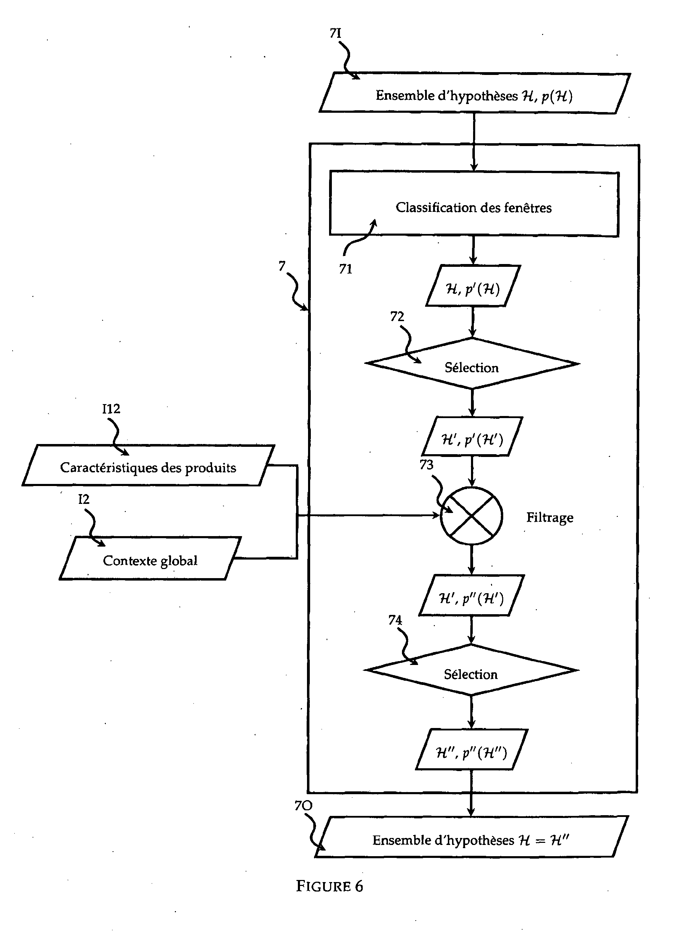

Notre procédé de détection d'objet (4) est décrit par le schéma de la figure 5. Chaque étape - "Initialisation" (41), "Classification" (42) et "Classification spécialisée" (43) - de ce procédé correspond à un bloc de classification de type (7), suivant le procédé décrit dans la figure 6. Chaque bloc (7) permettant d'intégrer les caractéristiques spécifiques (I12) et (I2), elles sont donc intégrées à différents niveaux. Le dernier bloc (43) est optionnel, il est donc représenté en pointillé dans la figure 5.

La figure 6 est un diagramme de flux détaillant les étapes à l'intérieur d'un bloc de classification (7) de la figure 5. Un bloc de classification est composé de deux étapes principales (71) et (73). Dans ce schéma, un ensemble d'hypothèses $\mathcal{H}$ décrit un ensemble d'associations entre un produit et une position de l'image. Chaque hypothèse associant un produit à une image est associé à une probabilité, ce qui donne, pour l'ensemble des hypothèses, un ensemble de probabilités $p(\mathcal{H})$. Chacune des deux étapes (71) et (73) permet de réévaluer les probabilités de chaque hypothèse, et chacune est suivie d'une étape de sélection, respectivement (72) et (74) pour sélectionner les meilleures hypothèses.

Nous allons commencer par expliquer de manière générale le procédé décrit par un bloc (7), illustré figure 6. Nous détaillerons ensuite comment la structure générale de procédé d'un bloc (7) est appliquée successivement dans les blocs (41),(42) et (43).

Soit $\mathcal{L}$ l'ensemble des produits contenus dans la base. Soit $\mathcal{F}$ l'ensemble des fenêtres extraites des images (1). Une hypothèse associe un produit $l$ à une fenêtre $f$ et se note $h = (f, l)$. Le procédé de détection associe chaque hypothèse à une probabilité p(h).

En apprentissage statistique, un classifieur est une fonction $g : \mathcal{X} \mapsto \mathcal{Y}$, où :

- $\mathcal{X}$ est l'espace des entrées ou vecteurs caractéristiques, c'est-à-dire les données connues,
- $\mathcal{Y}$ est l'espace des sorties ou labels, c'est-à-dire les données que l'on cherche à estimer.

En classification binaire, la dimension de $\mathcal{Y}$ est égale à 2. Typiquement $\mathcal{Y} = \{-1, 1\}$, et une donnée en entrée $x \in \mathcal{X}$ est classifiée positivement si y = g(x) = 1, et négativement si y = g(x) = -1. En classification multi-classe, la dimension de $\mathcal{Y}$ est supérieure à 2. Dans notre procédé, on utilise $\mathcal{Y} = \mathcal{L}$ et la dimension est égale au nombre de produits dans la base (I1).

Dans ce procédé, estimer la probabilité *p(h)* d'une hypothèse h = (f,l) revient à faire une classification multi-classe, où :

- les entrées du classifieur sont les fenêtres $f$ $(\mathcal{X} = \mathcal{F})$,
- les labels en sortie sont les produits $l$ $(\mathcal{Y} = \mathcal{L})$,
- la classification donne une sortie probabiliste, estimation de *p(h)* où h = (f, l).

L'ensemble des hypothèses associées à un ensemble de fenêtres est noté $\mathcal{H} = \{(f, l) | f \in \mathcal{F}, l \in \mathcal{L}\}$.

Dans le schéma de la figure 5, un bloc de classification (7) prend en entrée un ensemble d'hypothèses $\mathcal{H}$

associé à un ensemble de fenêtres $\mathcal{F} = \{f_1, \ldots, f_n\}$, associé à des probabilités $p(\mathcal{H}) = \{p(h)|h \in \mathcal{H}\}$. Il renvoie en sortie un sous-ensemble $\mathcal{H}'' \subsetneq \mathcal{H}$, avec les probabilités associées $p''(\mathcal{H}'')$.

Un bloc (7) comprend deux étapes principales. La première étape (71), dite de classification, considère chaque fenêtre individuellement, et utilise des techniques de reconnaissance d'image - comparant les images d'entrée (1) avec celles en base (111) - pour déterminer des probabilités $p'(\mathcal{H})$, où $p'(h)$ est la probabilité que le produit $l$ soit trouvé dans la fenêtre $f$. En fonction de ces probabilités, une étape de décision (72) élimine les hypothèses les moins probables, donnant $\mathcal{H}' \subset \mathcal{H}$. Pour ce nouvel ensemble d'hypothèses $\mathcal{H}'$, la deuxième étape (73), dite de filtrage, ré-évalue les probabilités en fonction des *a priori,* i.e. des entrées (I12) et/ou (12), c'est-à-dire calcule $p''(\mathcal{H}') = \{p''(h)|h \in \mathcal{H}'\}$ en s'appuyant sur des méthodes probabilistes. Une nouvelle étape de décision (74) sélectionne les meilleures hypothèses $\mathcal{H}'' \subset \mathcal{H}$.

La première étape, étant basée sur des critères image, travaille sur chaque image d'entrée de manière indépendante. La deuxième étape, au contraire, effectue un regroupement des résultats obtenus sur toutes les images d'entrées (1), pour utiliser des caractéristiques définies au niveau du planogramme (I2,3O).

Comme on peut le voir sur le schéma de la figure 5, le procédé complet de détection comporte au moins deux blocs de type (7) successifs. Chaque bloc implémente une version différente de la classification et du filtrage, permettant d'intégrer successivement différentes caractéristiques. D'autres blocs peuvent être ajoutés, en fonction des besoins, pour gérer certains cas courants et augmenter la précision des résultats. Nous décrivons les différents blocs dans ce qui suit.

Le bloc d'initialisation (41) considère en entrée l'ensemble des fenêtres possibles pour un nombre fixé d'échelles (par exemple selon un mécanisme de fenêtre glissante). Typiquement, l'ensemble des hypothèses associées à une fenêtre est constitué de l'ensemble des produits $\mathcal{L}$, suivant une distribution uniforme : $\forall h \in \mathcal{H}, \ p(h) = \frac{1}{|\mathcal{L}|}$.

Le but de ce premier bloc (41) est d'effectuer une détection des catégories d'objets. Ce bloc étant sous la forme (7), il est lui-même constitué de deux blocs (4171) et (4173). Le classifieur (4171) est un classifieur de catégories de produits.

Selon un mode de réalisation de la présente invention, une catégorie de produits est définie de manière semi-supervisée, selon le procédé suivant. Pour chaque image de la base (I11), un descripteur de contour est extrait, typiquement un histogramme d'orientation de gradients. Un algorithme de regroupement de données est ensuite appliqué pour déterminer automatiquement un petit nombre de formes représentatives des différents produits. En pratique, on utilisera un algorithme de $K$-moyennes, en gardant $K$ petit ($\leq 10$).

En principe, un produit $l$ peut avoir plusieurs représentants, i.e. plusieurs images dans la base (111). Ainsi, l'ensemble des produits forme une partition de l'ensemble des images. Si la définition des catégories reste non-supervisée, il n'est pas garanti *a priori* que tous les représentants d'un produit $l$ appartiennent au même groupe, i.e. que la partition selon les produits soit conservée. Nous introduisons donc un niveau de supervision, de la manière suivante : nous modifions l'algorithme de regroupement de manière à imposer, à chaque itération, que tous les représentants d'un même produit soient associés à un même groupe.

Finalement, nous obtenons une division de l'ensemble des produits (I1) en $K$ catégories $\lambda_1, \ldots, \lambda_K$ c'est-à-dire $\forall l \in \mathcal{L}, \ \exists! k \in \{1 \ldots K\}, \ l \in \lambda_k$.

Une catégorie $\lambda$ décrit un ensemble de produits partageant les mêmes caractéristiques géométriques de contours. Un classifieur basé sur ces catégories est donc plus robuste qu'un classifieur défini directement sur les produits (i.e. où une catégorie = un produit). Par ailleurs, la définition automatique des catégories présente l'avantage de pouvoir s'appliquer indifféremment à tous les types de produits.

Nous définissons ensuite un classifieur de catégories de produits, basé sur les mêmes descripteurs de contours. Le classifieur (4171) associe une fenêtre $f$ à un label $\lambda$ avec une probabilité $p$, où le label $\lambda$ correspond lui-même, comme nous venons de le définir, à un ensemble de produits. La classification positive d'une fenêtre pour une catégorie correspond donc à autant d'hypothèses. Par ailleurs, une fenêtre donnée peut être classifiée positivement pour plusieurs catégories.

D'autres manières de définir les catégories de produits utilisées à ce niveau sont possibles :

1. de manière totalement supervisée : en utilisant des champs renseignés en base, typiquement le packaging, par exemple pour les boissons : canettes, petites bouteilles, grandes bouteilles...

2. de manière semi-supervisée : en effectuant un apprentissage non-supervisé des formes pour les différentes catégories définies par des champs renseignés en base, et en utilisant les catégories pour lesquelles on peut extraire des formes caractéristiques.

Le deuxième bloc (4173) effectue un filtrage de ces hypothèses en intégrant différents *a priori,* en s'appuyant sur des modèles probabilistes. Plusieurs caractéristiques peuvent être intégrées à ce niveau. Selon un mode de réalisation de la présente invention, nous utilisons l'échelle de l'image pour éliminer les hypothèses les plus improbables.

Pour chaque association d'une fenêtre *f* à un produit *l*, i.e. chaque hypothèse *h,* il est possible d'estimer l'échelle de l'image $\sigma(h)$, puisque l'on dispose de la taille de la fenêtre et de la taille du produit (I12).

On en déduit une distribution globale de probabilité des échelles, en supposant qu'on a n hypothèses $h_i = (f_i, l_i)$ donnant chacune une échelle $\sigma_i = \sigma(h_i)$ :

$$p(\sigma) = \frac{1}{n} \sum_{i=1}^{n} K(\sigma - \sigma_i)$$

Puis pour chaque détection, on calcule un nouveau score en utilisant la probabilité *a posteriori* :

$$p'(h) \quad \propto \quad p(\sigma(h)|h)p(h),$$
$$\propto \quad p(\sigma(h))p(h),$$

puisque $p(\sigma(h)|h) = p(\sigma(h))$.

Les hypothèses obtenues en sortie de cette étape d'initialisation (41) sont à la fois très nombreuses et très générales. En particulier, elles ne permettent pas de prendre une décision finale sur les produits. En effet, le classifieur (4171), restant au niveau des catégories, donne la même probabilité à tous les produits d'une catégorie. En théorie, l'estimation de l'échelle pourrait permettre une certaine discrimination entre les différents produits d'une même classe. En pratique, les produits d'une même catégorie ont souvent aussi la même échelle.

Une nouvelle étape de classification (42), plus fine, est donc indispensable avant de pouvoir prendre une décision.

Cette étape (42), étant un bloc de type (7), est elle-même divisée en deux étapes.

Dans un premier temps, une étape de classification (4271) permet de réduire considérablement l'ensemble des hypothèses pour chaque fenêtre. A ce niveau, le procédé est basé sur de l'appariement de points d'intérêts pour déterminer les images de la base correspondant aux hypothèses d'entrée les plus similaires aux images représentées par les fenêtres candidates. Un algorithme du type de celui décrit dans le document "David G. Lowe. Method and Apparatus for Identifying Scale Invariant Features and Use of Same for Locating an Object in an Image, 2004" est utilisé.

Plus précisément, une fenêtre en entrée *f* est associée à un ensemble d'hypothèses $\mathbf{h}_f = \{h = (f', l)|f' = f$ et $(f, l) \in \mathcal{H}\}$. On réalise un appariement de points entre *f* et toutes les images de la base correspondant à $\{l|h = (f, l) \in \mathbf{h}_f\}$. Ainsi, pour chaque hypothèse $h \in \mathbf{h}_f$, on a une nouvelle probabilité de détection $p'(h)$, qui est combinée avec $p(h)$. Un processus de décision (4272) élimine les candidats les moins probables.

Dans un second temps, on utilise l'ensemble des hypothèses détectées pour toutes les fenêtres, pour effectuer un nouveau filtrage (4273). Cette étape nécessite la connaissance de la structure du linéaire (30). Si elle n'a pas encore été effectuée de manière indépendante, selon la définition du contexte (I2), l'étape de détection de la structure (3) doit s'insérer à ce niveau.

Toujours en nous appuyant sur des modèles probabilistes, nous introduisons ici les critères géométriques et contextuels définis précédemment (I2). Chaque critère permet à lui seul d'obtenir une nouvelle probabilité $p''(h)$ à partir de $p'(h)$, où $h = (f, l) \in \mathcal{H}'$. Pour alléger les notations, nous noterons momentanément $p' = p$, $p'' = p'$. Selon un mode de réalisation de la présente invention, le premier critère est la fréquence d'un produit. A partir de la fréquence $p(l)$ du produit *l,* on estime $p_f(h)$. Un deuxième critère possible est appelé le positionnement vertical d'un produit. On note $f_v$ la position verticale d'une fenêtre *f*, et $f_h$ sa position horizontale, de telle manière que $f = (f_h, f_v)$. La probabilité de positionnement vertical donne la probabilité $p(f_v|l)$ que le produit *l* soit à la position $f_v$, et sert à estimer $p_v(h)$. Enfin, troisième critère possible, les cartes de cooccurrence 2D donnent les probabilités conditionnelles $p(h|h')$ entre deux hypothèses $(h, h') \in \mathcal{H}'^2$. En considérant chaque paire, on estime $p_c(h)$.

Nous précisons plus loin comment évaluer ces probabilités. Dans un premier temps, nous expliquons comment ces probabilités sont combinées dans notre procédé.

L'objectif est d'estimer une probabilité $p'(h)$ basée sur les différentes estimations obtenues à partir de $p(h)$ et du contexte (I2), $p_f$, $p_v$, $p_c$. Par ailleurs, nous souhaitons maximiser le taux de rappel, c'est-à-dire obtenir un maximum de détections. Selon un mode de réalisation de la présente invention, enfin, nous n'utilisons pas d'*a priori* sur l'importance relative des différents critères introduits. Selon ce mode de réalisation, nous combinons donc ces probabilités en optimisant une sigmoïde définie de la manière suivante :

$$p'(h|\theta) = \frac{1}{1 + e^{f_\theta(p(h))}}, \qquad\qquad (B)$$

où *p(h)* est la probabilité en entrée, à partir de laquelle sont estimées $p_f(h)$, $p_v h$ et $p_c(h)$, et où $f_\theta$ est une combinaison linéaire de ces différentes probabilités :

$$f_\theta(p(h)) = \alpha \cdot p_f(h) + \beta \cdot p_v(h) + \gamma \cdot p_c(h) + \delta,$$

avec $\theta = (\alpha, \beta, \gamma, \delta) \in \mathbb{R}^4$ et sous contrainte $\alpha + \beta + \gamma = 1$.

Le paramètre $\theta$ est par exemple estimé en maximisant le rappel sur l'ensemble d'apprentissage.

Soit $T = \{(f_1, l_1),..., (f_n, l_n)\}$ l'ensemble des fenêtres annotées dans la vérité terrain. On dit que l'hypothèse $h = (f, l) \in \mathcal{T}$ si $\exists (f_i, l_i) \in \mathcal{T}$ telle que les deux fenêtres $f$ et $f_i$ sont très proches et $l = l_i$.

Le taux de rappel $\mathcal{R}_\theta$ est donné par le taux de vrais positifs par rapport au nombre de positifs :

$$\mathcal{R}_\theta = \frac{TP_\theta}{TP_\theta + FN_\theta}$$

où $FN_\theta$ est le nombre de faux négatifs, c'est-à-dire le nombre de fenêtres contenant un produit et incorrectement classifiées :

$$FN_\theta = |\{h|p'(h|\theta) < 0,5 \text{ et } h \in \mathcal{T}\}|$$

et $TP_\theta$ le nombre de vrais positifs, c'est-à-dire le nombre de fenêtres contenant un produit et auxquelles la classification attribue le bon produit :

$$TP_\theta = |\{h|p'(h|\theta) \geq 0,5 \text{ et } h \in \mathcal{T}\}|$$

Selon un mode de mise en oeuvre du procédé, on a donc l'optimisation suivante :

$$\theta \qquad = \arg\max_{\theta'} \mathcal{R}_{\theta'}$$

$$\text{t.q.} \quad \theta' = (\alpha, \beta, \gamma, \delta) \in \mathbb{R}^4$$

$$\alpha + \beta + \gamma = 1$$

Nous allons maintenant détailler des opérations possibles permettant de déterminer $p_f$, $p_v$ et $p_c$.

Plus un produit est fréquent, plus on favorisera sa détection, en fonction du nombre de candidats pour ce produit. Cela peut se traduire par l'équation suivante :

$$p_f(h) = p(l) \cdot \frac{p(h)}{\sum_{h' = (l', f'), l' = l} p(h')},$$

où :

- *p(h)* est la probabilité en entrée de (4273),
- *p(l)* est la probabilité *a priori* du produit *l*, estimée sur la base de planogrammes (l3),
- $h' \in \mathcal{H}'$ est une hypothèse,
- la somme du dénominateur est calculée sur l'ensemble des hypothèses *h'* concernant le même produit que *h*. Cette somme correspond donc à la probabilité de trouver le produit *l* dans les images (1).

La probabilité de positionnement vertical introduit la probabilité de trouver un produit à une certaine hauteur. Selon un mode de réalisation de la présente invention, on estime (la suite de calculs permettant d'expliciter les notations) :

$$
\begin{aligned}
p_v(h) \quad = \quad & p_v(f, l) = p_v(f_v, f_h, l) \\
= \quad & p(f_v | l, f_h) p(l, f_h) \\
= \quad & p(f_v | l) \cdot \sum_{h' = (l', f'), l' = l, f_h' = f_h} p(h'),
\end{aligned}
$$

où :

- *p(h)* est la probabilité en entrée de (4273),
- $p(f_v | l) = p(f_v | l, f_h)$ est la probabilité de positionnement vertical du produit *l*, estimée sur la base de planogrammes (13), et supposée indépendante du positionnement horizontal du produit,
- $h' = (l', f') = (l', f_h', f_v')$ désigne une hypothèse,
- $p(l, f_h) = \sum_{h' = (l', f'), l' = l, f_h' = f_h} p(h')$ est estimée en marginalisant $p(l, f_h, f_v)$ par rapport aux positions verticales.

Enfin, selon un mode de réalisation de la présente invention, pour introduire les probabilités de cooccurrences, nous utilisons un mécanisme de vote. Les cartes de cooccurrences permettent d'estimer la probabilité conditionnelle d'un produit par rapport à un autre en fonction de leur position relative, définie par l'équation (A). Pour chaque paire d'hypothèses (*h, h'*), on calcule leur position relative *x(h, h')*, dépendant des fenêtres *f, f'*. On en déduit la probabilité conditionnelle de *h* par rapport à *h'* $p(h|h') = \hat{f}(x(h, h'))$. En pratique, seules les paires apparaissant dans un même voisinage sont prise en compte. En effet, la probabilité de cooccurrence n'a de sens que si les produits sont souvent proches l'un de l'autre. Par ailleurs, cela permet de réduire considérablement le temps de calcul. La nouvelle probabilité $p_c(h)$ peut être calculée de la manière suivante :

$$
p_c(h) = \sum_{h' = (l', f')} p(h|h') p(h'),
$$

où :

- *p(h')* est l'estimation de la probabilité de l'hypothèse h en entrée du filtre (73),
- *p(h|h')* est la probabilité conditionnelle de *h* par rapport à *h'* estimée en utilisant la carte de cooccurrence de *h'*,
- la somme est effectuée sur l'ensemble des hypothèses dans le voisinage de *h*, c'est-à-dire l'ensemble des hypothèses *h'* pour lesquelles *x(h, h')* est définie.

Ainsi, selon ce mode de réalisation de la présente invention, chaque produit détecté vote pour tous les autres en fonction de leur probabilité de cooccurrence et de leur position relative. Plus un produit est dans un contexte habituel, plus il aura de chances d'être détecté.

L'étape d'estimation de $p''(h, \theta), h \in \mathcal{H}'$ est à nouveau suivie d'une étape de décision, pour ne garder que les meilleurs hypothèses. Selon le mode de réalisation de la présente invention précédemment décrit, étant donné l'optimisation de $\theta$, il est ici naturel de garder les hypothèses *h* telles que *p'(h, θ)* > 0,5 pour définir $\mathcal{H}$".

Les blocs de type (7) peuvent se succéder autant qu'il est nécessaire. En fonction des particularités de la base de produits, on pourra intégrer différentes caractéristiques. Cette étape (43), dite de spécialisation, est représentée par le bloc en pointillé dans la figure 5.

A ce niveau, l'ensemble des hypothèses associées à une fenêtre est très restreint. Il est donc possible de définir des classifieurs (4371) très spécifiques. Nous avons relevé deux cas dans lesquels un classifieur supplémentaire (43) est nécessaire :

1. cas de produits pour lesquels la *couleur* est fortement discriminante, alors qu'ils se ressemblent beaucoup ou sont parfaitement identiques au niveau de la texture (voir par exemple la figure 8),

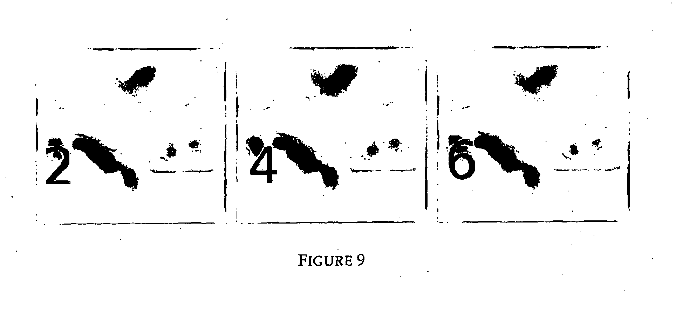

2. cas de produits qui ne diffèrent que par un petit nombre de *détails* dans l'image, comme par exemple pour les produits de la figure 9.

Dans ces cas, le classifieur précédent (42) échoue, dans le sens où il ne parvient pas à distinguer les produits entre eux. En pratique, ces produits sont donc retrouvés par le procédé précédent avec des probabilités du même ordre de grandeur, dans un ordre quelconque. Il est particulièrement important d'avoir un traitement spécifique si l'on veut pouvoir prendre la bonne décision. Nous proposons dans ce qui suit d'adapter le procédé pour chacun de ces deux cas.

Pour la deuxième partie du bloc (7), le bloc de filtrage (4373) pourra, selon un mode de réalisation de la présente invention, et selon les besoins, reprendre le bloc (4273) ou se réduire à l'identité, c'est-à-dire $p'' = p'$ et $\mathcal{H}'' = \mathcal{H}'$.

La figure 8 est un schéma représentant un exemple d'images de deux produits justifiant l'application d'une étape supplémentaire (43) de classification couleur : la texture est pratiquement identique, et la couleur (ici simplement un niveau de gris) permet facilement de faire la différence. La figure 8 donne un exemple type où le classifieur (42) va échouer, mais où l'étude des couleurs permet de distinguer facilement entre les produits. Ce genre de situation arrive très fréquemment lorsqu'il faut distinguer entre des déclinaisons de parfum d'un produit. Dans ce cas, le procédé exploite les informations de couleur de la manière suivante :

- l'image de la fenêtre est converti dans l'espace de couleur HSB,
- un histogramme couleur est extrait, en divisant les 3 dimensions de l'espace couleur en $N_h$, $N_s$, $N_b$ parties,
- cette même opération est effectuée sur toutes les images de la basé correspondant aux hypothèses d'entrée pour cette fenêtre,
- pour chaque hypothèse, une similarité est calculée entre l'histogramme de la fenêtre et l'histogramme de l'image hypothèse, (typiquement une intersection d'histogramme)
- la probabilité d'associer une hypothèse à la fenêtre est estimée en fonction de cette similarité.

Si la couleur ne suffit pas à résoudre les ambiguïtés, on utilisera avantageusement un classifieur spécifique pour chaque ensemble d'hypothèses, pour distinguer entre des produits différents mais très similaires.

La figure 9 est un schéma représentant un exemple d'images de trois produits justifiant l'application d'une étape supplémentaire (43) d'identification visuelle : les visuels sont parfaitement identiques à un détail près. Dans le schéma, le détail qui change entre les images est simplement un chiffre (2, 4, 6). La figure 9 donne un exemple type où la classification (42) précédente échoue, et où la couleur ne permet pas de résoudre les ambiguïtés. Seule une petite zone de chaque visuel permet de faire la différence entre les produits.

Pour prendre en compte de si légères différences, il est nécessaire d'entraîner un classifieur permettant de discriminer entre instances d'une même classe d'objets. En reconnaissance d'objet, on parle d' *identification visuelle.*

L'idée est de déterminer, pour une classe d'objets, quelles sont les parties de l'objet qui permettent de distinguer entre les individus.

Lorsque cela est nécessaire, le procédé intègre donc une étape supplémentaire de classification, spécialisée en identification visuelle. Des algorithmes tels que ceux décrits dans les documents "Eric Nowak et Frederic Jurie. Learning Visual Similarity Measures for Comparing Never Seen Objects. 2007 IEEE Conference on Computer Vision and Pattern Recognition, pages 1-8, Juin 2007" et "A Ferencz, E G Learned-Miller, et J Malik. Learning to locate informative features for visual identification. International Journal of Computer Vision, 77(1) :3-24, 2008" peuvent s'intégrer à ce niveau du procédé.

Si on revient au schéma de la figure 4, l'étape suivant la détection de produits (4) est leur positionnement dans le planogramme (5). A la fin du procédé de détection des produits (4), on a un ensemble d'hypothèses (40) associées à des probabilités. L'étape suivante (5) consiste à positionner les produits de manière définitive dans le planogramme. Cette étape du processus est très simple, et consiste à prendre une décision à partir de ces résultats pour positionner les produits.

Selon un mode de réalisation de la présente invention, la procédure est la suivante :

1. Ordonner les hypothèses par probabilités décroissantes

2. Pour chaque hypothèse $h = (f,l)$,

(a) Calculer la position dans le planogramme, c'est-à-dire dans sa structure (30), en fonction de la position de la fenêtre $f$ dans l'image d'entrée,

(b) S'il n'y a aucun produit sur le planogramme à cette position, ajouter le produit 1 à cette position.

Cette partie s'inscrit comme une étape incontournable du procédé de construction automatique du planogramme. Une fois l'étape de positionnement des produits (5) terminée, on obtient le planogramme final (6) complet.

Nous avons décrit dans ce qui précède comment mettre en oeuvre le procédé de construction automatique d'un planogramme à partir d'une ou plusieurs images de linéaires.

Avantageusement, l'invention peut s'utiliser pour automatiser différentes applications de merchanlisting. En particulier, l'exploitation de ce procédé apporte un gain de temps considérable pour les agents contrôlant la concordance de planogrammes avec l'agencement réel des produits en magasin. Il suffit pour eux de prendre des photos du rayons, de les envoyer au dispositif mettant en oeuvre notre procédé.

**Revendications**

1. Procédé de construction automatique d'un planogramme **caractérisé en ce qu'**il comporte :

   - la réception d'une ou plusieurs images de linéaire (1),
   - une étape d'assemblage (2) des dites images, dans le cas où elles sont plusieurs,
   - une étape de construction automatique de la structure (3) constituant le planogramme,
   - une étape de reconnaissance automatique (4) des produits contenus dans les images,
   - une étape de positionnement des produits (5) en fonction des résultats de la précédente reconnaissance automatique des produits (4) et des résultats de la précédente détection de la structure (3),

   l'étape de reconnaissance automatique (4) étant elle-même **caractérisée en ce qu'**elle comporte au minimum les deux étapes suivantes :

   (a) une étape de reconnaissance initiale (41), donnant un ensemble de possibilités, sous la forme de couples (hypothèse, probabilité de détection), dans lesquels une hypothèse est un couple (position dans l'image, produit identifié). Cette étape (41) est constituée d'une étape de classification de catégories (4171) et d'une étape de filtrage global de ces résultats (4173) utilisant des méthodes probabilistes pour intégrer des informations spécifiques aux produits (112),
   (b) une seconde étape de reconnaissance (42), utilisant les résultats de (41) pour faire une nouvelle détection, constituée d'une étape de classification (4271) basée sur des appariements de points d'intérêts, et d'une seconde étape de filtrage (4273) au niveau du planogramme, intégrant des informations globales sur le contexte (I2) estimées au préalable sur une base de planogrammes (I3),

   chacune des étapes de classification et filtrage (4171, 4173, 4271, 4273) étant suivie immédiatement par une étape de sélection des meilleurs candidats, respectivement (4172, 4174, 4272, 4274) correspondant à un seuillage des probabilités de détection.

2. Procédé selon la revendication 1, à laquelle est ajoutée à la suite de l'étape de classification (42) une étape de reconnaissance spécialisée (43) de type (7), c'est-à-dire comportant une étape de classification (71) puis sélection des meilleurs candidats (72) et une étape de filtrage global (73) puis sélection des meilleurs candidats (74), **caractérisée en ce que** l'étape de reconnaissance spécialisée (43) exploite les informations couleur des images.

3. Procédé selon la revendication 1 ou 2, à laquelle est ajoutée à la suite de l'étape de classification (42) une étape de reconnaissance spécialisée (43) de type (7), c'est-à-dire comportant une étape de classification (71) puis sélection des meilleurs candidats (72) et une étape de filtrage global (73) puis sélection des meilleurs candidats (74), **caractérisée en ce que** l'étape de reconnaissance spécialisée (43) permet la distinction entre des produits identiques à quelques détails près, en utilisant des algorithmes d'identification visuelle.

4. Procédé selon l'une des revendications précédentes, **caractérisé en ce que** les informations spécifiques (112) utilisées dans l'étape de filtrage (4173) de la reconnaissance initiale (41) sont de type échelle.

5. Procédé selon l'une des revendications précédentes, **caractérisé en ce que** les informations globales (I2) utilisées dans l'étape de filtrage (4273) de la deuxième étape de reconnaissance (42) comportent les mesures suivantes :

   - mesures de probabilités de cooccurrences entre produits,

- mesures de probabilités de positionnement vertical des produits,
- mesures de fréquence des produits,

estimées au préalable sur une base de planogrammes (I3).

6. Procédé selon la revendication 5, **caractérisé en ce que** dans l'étape de filtrage (4273) de la deuxième étape de reconnaissance (42) l'intégration des dites informations globales (I2) avec les résultats de détection issus de l'étape de classification (4271) comporte les étapes suivantes :

- une étape d'estimation des probabilités indépendante pour chacune des mesures de probabilités définies dans les informations globales (I2),
- une étape de combinaison probabiliste paramétrée de type (B), où les paramètres sont déterminés au préalable par optimisation d'un taux de reconnaissance global.

7. Procédé selon l'une des revendications précédentes 1-6, **caractérisé en ce que** l'étape de construction automatique de la structure (3) :

- précède l'étape de reconnaissance (4), et utilise des techniques de traitement d'images sur (1), combinées avec les résultats de l'assemblage (2),
- est utilisée dans le calcul des informations globales (I2).

8. Procédé selon l'une des revendications précédentes 1-6, **caractérisé en ce que** l'étape de construction automatique de la structure du planogramme (3) est effectuée à partir des résultats de l'étape de reconnaissance (4), en s'appuyant sur les positions des produits détectés, et **en ce que** le calcul des informations globales (12) est indépendant de la dite structure (30).

9. Procédé selon l'une des revendications précédentes 1-7, **caractérisé en ce que** les catégories des produits utilisées en (4171) sont issues d'une classification semi-supervisée des produits, dans laquelle :

- la supervision sert uniquement à conserver la partition des images selon les produits,
- une catégorie regroupe des produits partageant les mêmes caractéristiques géométriques.

10. Procédé selon l'une des revendications précédentes 1-7, **caractérisé en ce que** les catégories des produits utilisées en (4171) correspondent à des catégories sémantiques de produits (famille, segment, sous-segment...), c'est-à-dire que la classification (4171) est supervisée.

## Patentansprüche

1. Verfahren zur automatisierten Erstellung eines Planogramms, **dadurch gekennzeichnet, dass** es Folgendes umfasst:

- Aufnehmen eines oder mehrerer Bilder von Regalen (1),
- einen Schritt des Zusammensetzens (2) der Bilder, falls es mehrere sind,
- einen Schritt des automatischen Erstellens der Struktur (3), die das Planogramm bildet,
- einen Schritt des automatischen Erkennens (4) der Produkte, die in den Bildern enthalten sind,
- einen Schritt des Positionierens der Produkte (5) in Abhängigkeit von den Ergebnissen aus dem vorhergehenden automatischen Erkennen der Produkte (4) und den Ergebnissen aus dem vorhergehenden Erfassen der Struktur (3),

wobei der Schritt des automatischen Erkennens (4) selbst wiederum **dadurch gekennzeichnet ist, dass** er wenigstens die folgenden zwei Schritte umfasst:

(a) einen Schritt des Ersterkennens (41), der eine Menge von Möglichkeiten ergibt, in Form von Paaren (Hypothese, Erfassungswahrscheinlichkeit), in denen eine Hypothese ein Paar (Position im Bild, identifiziertes Produkt) ist, wobei dieser Schritt (41) von einem Schritt des Klassifizierens in Kategorien (4171) und einem Schritt des globalen Filterns dieser Ergebnisse (4173) unter Verwendung von Wahrscheinlichkeitsmethoden zum Integrieren produktspezifischer Informationen (I12) gebildet wird,

(b) einen zweiten Schritt des Erkennens (42), unter Verwendung der Ergebnisse aus (41), um eine neue Erfassung durchzuführen, die von einem Schritt des Klassifizierens (4271) basierend auf Paarungen von Interessenspunkten und einem zweiten Schritt des Filterns (4273) auf Planogrammebene gebildet wird, wobei globale Informationen über den Kontext (I2) integriert werden, die zuvor auf einer Basis von Planogrammen (I3) geschätzt wurden,

wobei jedem der Schritte des Klassifizierens und Filterns (4171, 4173, 4271, 4273) unmittelbar ein Schritt des Auswählens der besten Kandidaten folgt, wobei jeweils (4172, 4174, 4272, 4274) einer Schwellwertbildung der Erfassungswahrscheinlichkeiten entsprechen.

2. Verfahren nach Anspruch 1, dem nach dem Schritt des Klassifizierens (42) ein Schritt des Spezialerkennens (43) einer Art (7) hinzugefügt wird, das heißt, umfassend einen Schritt des Klassifizierens (71), dann des Auswählens der besten Kandidaten (72) und ein Schritt des globalen Filterns (73), dann des Auswählens der besten Kandidaten (74), **dadurch gekennzeichnet, dass** der Schritt des Spezialerkennens (43) die Farbinformationen der Bilder nutzt.

3. Verfahren nach Anspruch 1 oder 2, dem nach dem Schritt des Klassifizierens (42) ein Schritt des Spezialerkennens (43) einer Art (7) hinzugefügt wird, das heißt, umfassend einen Schritt des Klassifizierens (71), dann des Auswählens der besten Kandidaten (72) und ein Schritt des globalen Filterns (73), dann des Auswählens der besten Kandidaten (74), **dadurch gekennzeichnet, dass** der Schritt des Spezialerkennens (43) durch Verwenden von Algorithmen zur visuellen Identifikation die Unterscheidung zwischen identischen Produkten bis auf einige Details genau ermöglicht.

4. Verfahren nach einem der vorhergehenden Ansprüche, **dadurch gekennzeichnet, dass** die spezifischen Informationen (I12), die im Schritt des Filterns (4173) der Ersterkennung (41) verwendet werden, skalenartig sind.

5. Verfahren nach einem der vorhergehenden Ansprüche, **dadurch gekennzeichnet, dass** die globalen Informationen (I2), die im Schritt des Filterns (4273) des zweiten Schritts des Erkennens (42) verwendet werden, folgende Messungen umfassen:

- Wahrscheinlichkeitsmessungen von Kookkumenzen zwischen Produkten,
- Wahrscheinlichkeitsmessungen der vertikalen Positionierung der Produkte,
- Häufigkeitsmessungen der Produkte,

die zuvor auf einer Basis von Planogrammen (I3) geschätzt wurden.

6. Verfahren nach Anspruch 5, **dadurch gekennzeichnet, dass** im Schritt des Filterns (4273) des zweiten Schritts des Erkennens (42) die Integration der globalen Informationen (I2) mit den Erfassungsergebnissen aus dem Schritt des Klassifizierens (4271) folgende Schritte umfasst:

- einen Schritt des unabhängigen Schätzens der Wahrscheinlichkeiten für jede des Wahrscheinlichkeitsmessungen, die in den globalen Informationen (I2) definiert sind,
- einen Schritt des parametrisierten, probabilistischen Kombinierens der Art (B), wobei die Parameter zuvor durch Optimierung einer globalen Erkennungsrate bestimmt wurden.

7. Verfahren nach einem der vorhergehenden Ansprüche 1 bis 6, **dadurch gekennzeichnet, dass** der Schritt des automatischen Erstellens der Struktur (3):

- dem Schritt des Erkennens (4) vorausgeht und Techniken zur Verarbeitung von Bildern auf (1) verwendet, kombiniert mit den Ergebnissen der Zusammensetzung (2),
- in der Berechnung der globalen Informationen (I2) verwendet wird.

8. Verfahren nach einem der vorhergehenden Ansprüche 1 bis 6, **dadurch gekennzeichnet, dass** der Schritt des automatischen Erstellens der Struktur des Planogramms (3) ausgehend von den Ergebnissen des Schritts des Erkennens (4) ausgeführt wird, indem man sich auf die Positionen der erfassten Produkte stützt, und dadurch, dass die Berechnung der globalen Informationen (I2) unabhängig von der Struktur (30) ist.

9. Verfahren nach einem der vorhergehenden Ansprüche 1 bis 7, **dadurch gekennzeichnet, dass** die Kategorien der in (4171) verwendeten Produkte aus einer halbüberwachten Klassifizierung der Produkte stammen, wobei:

- die Überwachung ausschließlich dazu dient, die Aufteilung der Bilder gemäß den Produkten zu bewahren,
- eine Kategorie Produkte vereint, die die gleichen geometrischen Merkmale teilen.

**10.** Verfahren nach einem der vorhergehenden Ansprüche 1 bis 7, **dadurch gekennzeichnet, dass** die Kategorien der in (4171) verwendeten Produkte semantischen Produktkategorien entsprechen (Familie, Segment, Untersegment,...), das heißt, dass die Klassifizierung (4171) überwacht ist.

**Claims**

**1.** Method for the automatic construction of a planogram, **characterised in that** it comprises:

- the reception of one or more shelving images (1),
- a step of assembling (2) said images, in the case where there are several,
- a step of automatic construction of the structure (3) constituting the planogram,
- a step of automatic recognition (4) of the products contained in the images,
- a step of positioning the products (5) according to the results of the previous automatic recognition of the products (4) and the results of the previous detection of the structure (3),

the automatic recognition step (4) being itself **characterised in that** it comprises at a minimum the following two steps:

a) an initial recognition step (41), giving a set of possibilities, in the form of ordered pairs (hypothesis, probability of detection), in which a hypothesis is an ordered pair (position in the image, identified product). This step (41) consists of a category classification step (4171) and a step (4173) of global filtering of these results using probabilistic methods for integrating information specific to the products (I12),
b) a second recognition step (42), using the results of (41) to make a new detection, consisting of a classification step (4271) based on matchings of points of interest, and a second filtering step (4273) at the planogram level, integrating global information on the context (I2) previously estimated on a base of planograms (I3),

each of the classification and filtering steps (4171, 4173, 4271, 4273) being followed immediately by a step of selecting the best candidates, respectively (4172, 4174, 4272, 4274) corresponding to a thresholding of the detection probabilities.

**2.** Method according to claim 1, to which is added, following the classification step (42), a specialised recognition step (43) of type (7), that is to say comprising a step (71) of classification and then selection of the best candidates (72) and a step of global filtering (73) and then selection of the best candidates (74), **characterised in that** the specialised recognition step (43) uses the image colour information.

**3.** Method according to claim 1 or 2, to which is added, following the classification step (42), a specialised recognition step (43) of type (7), that is to say comprising a step (71) of classification and then selection of the best candidates (72) and a step (73) of global filtering and then selection of the best candidates (74), **characterised in that** the specialised recognition step (43) distinguishes between products that are identical to within a few details, using visual identification algorithms.

**4.** Method according to one of the preceding claims, **characterised in that** the specific information (I12) used in the filtering step (4173) of the initial recognition (41) are of the scale type.

**5.** Method according to one of the preceding claims, **characterised in that** the global information (I2) used in the filtering step (4273) of the second recognition step (42) comprise the following measurements:

- measurements of probabilities of co-occurrences between products,
- measurements of probabilities of vertical positioning of the products,
- measurements of frequency of the products,

previously estimated on a base of planograms (I3).

**6.** Method according to claim 5, **characterised in that**, in the filtering step (4273) of the second recognition step (42), the integration of said global information (I2) with the detection results issuing from the classification step (4271) comprises the following steps:

- a step of estimation of the probabilities that is independent for each of the probability measurements defined in the global information (I2),
- a parameterised probabilistic combination step of type (B), where the parameters are previously determined by optimisation of a global recognition level.

7. Method according to one of the preceding claims 1-6, **characterised in that** the step of automatic construction of the structure (3):

- precedes the recognition step (4) and uses image processing techniques (1), combined with the results of the assembly (2),
- is used in calculating the global information (I2).

8. Method according to one of the preceding claims 1-6, **characterised in that** the step of automatic construction of the structure of the planogram (3) is performed using the results of the recognition step (4), relying on the positions of the products detected, and **in that** the calculation of the global information (I2) is independent of said structure (30).

9. Method according to one of the preceding claims 1-7, **characterised in that** the categories of the products used at (4171) issue from a semi-supervised classification of the products, in which:

- the supervision serves only to preserve the partitioning of the images according to the products,
- a category groups together products showing the same geometric features.

10. Method according to one of the preceding claims 1-7, **characterised in that** the categories of the products used at (4171) correspond to semantic categories of products (family, segment, sub-segment, etc.), that is to say the classification (4171) is supervised.

81

Dispositif d'acquisition d'images

82

Serveur d'images

83

Serveur d'analyse

84

Base de produits

85

Base de planogrammes

FIGURE 1

structure de planogramme (3O)

élément (61)          élément (61)

étagères (62)

FIGURE 2

planogramme (6)

produits (63)

FIGURE 3

2

Assemblage

1

Images de linéaire

3

Détection de la structure

30

Structure de linéaire

I1

Base de produits

I11

Images

I12

Propriétés

4

Détection des produits

5

Positionnement des produits

I2

Contexte global

6

Planogramme final

FIGURE 4

1

Images

4I

Ensemble d'hypothèses

41

Initialisation

I12

Caractéristiques des produits

42

Classification

I2

Contexte global

43

Classification spécialisée

4O

Ensemble de produits détectés

FIGURE 5

71

Ensemble d'hypothèses $\mathcal{H}$, $p(\mathcal{H})$

7

Classification des fenêtres

71

$\mathcal{H}$, $p'(\mathcal{H})$

72

Sélection

$\mathcal{H}'$, $p'(\mathcal{H}')$

73

I12

Caractéristiques des produits

I2

Contexte global

Filtrage

$\mathcal{H}'$, $p''(\mathcal{H}')$

74

Sélection

$\mathcal{H}''$, $p''(\mathcal{H}'')$

70

Ensemble d'hypothèses $\mathcal{H} = \mathcal{H}''$

FIGURE 6

FIGURE 7

FIGURE 8

FIGURE 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009027839 A2

**Littérature non-brevet citée dans la description**

- **A. WELLHOFF ; J.E. MASSON.** *Le merchandising : bases, nouvelles techniques, category management,* 2005
- **DAVID G. LOWE.** *Method and Apparatus for Identifying Scale Invariant Features and Use of Same for Locating an Object in an Image,* 2004
- **CAROLINA GALLE-GUILLOS ; SERGE BELONGIE.** Context based object categorization : A critical survey. *Computer Vision and Image Understanding,* Juin 2010, vol. 114 (6), 712-722
- **ERIC NOWAK ; FREDERIC JURIE.** Learning Visual Similarity Measures for Comparing Never Seen Objects. *2007 IEEE Conference on Computer Vision and Pattern Recognition,* Juin 2007, 1-8
- **A FERENCZ ; E G LEARNED-MILLER ; J MALIK.** Learning to locate informative features for visual identification. *International Journal of Computer Vision,* 2008, vol. 77 (1), 3-24